Europäisches Patentamt

European Patent Office

Office européen des brevets

(19)

(11) Publication number : **0 549 311 A1**

(12) **EUROPEAN PATENT APPLICATION**

(21) Application number : **92311662.8**

(22) Date of filing : **21.12.92**

(51) Int. Cl.⁵ : **B60C 15/00,** B60C 9/22

(30) Priority : **27.12.91 JP 359640/91**

(43) Date of publication of application :
**30.06.93 Bulletin 93/26**

(84) Designated Contracting States :
**DE FR GB**

(71) Applicant : **SUMITOMO RUBBER INDUSTRIES LIMITED**
**1-1 Tsutsuicho 1-chome Chuo-ku**
**Kobe-shi Hyogo-ken (JP)**

(72) Inventor : **Nakasaki, Eiji**
**629 Kimura, Kakogawa-cho**
**Kakogawa-shi, Hyogo-ken (JP)**

(74) Representative : **Stewart, Charles Geoffrey**
**SP TYRES UK LIMITED Tyre Technical Division**
**Fort Dunlop, Erdington, Birmingham B24 9QT (GB)**

(54) **Motorcycle radial tyre.**

(57) A motorcycle radial tyre comprises a tread portion (2), a pair of axially spaced bead regions (4), a pair of sidewalls (3) extending between tread edges (E1 and E2) and the bead regions (4) , a bead core (5) disposed in each bead regions (4) a radial carcass (6) comprising a ply (6a) of cords extending between the bead regions (4) and turned up around the bead cores (5) from the axially inside to the outside thereof to form two carcass ply turned up portions (9B1 and 9B2) and a carcass ply main portion (9A) therebetween, and a belt (7) disposed radially outside the carcass in the tread portion, characterised in that each of the two carcass ply turned up portions (9B1 and 9B2) extend from each bead region (4) into the tread portion (2) to lie beyond the tyre equator (C) so that the edges (e) thereof overlap each other to form an overlapped portion (10) in the tread centre portion (TC), the axial width (2RW) of the overlapped portion (10) being in the range of 0.2 to 0.6 times the tread width (TW) between the tread edges, the belt (7) having a ply (7a) of at least one cord (21) wound spirally at an angle of not more than 5 degrees with respect to the tyre equator (C) , and the axial width (BW) of the belt ply (7a) being in the range of 0.85 to 0.95 times the tread width (TW).

Fig.1

EP 0 549 311 A1

The present invention relates to a pneumatic tyre for motorcycle, more particularly a radial tyre for a heavy motorcycle.

Hitherto, in motorcycle tyres, cross ply carcass structures have been widely used for their superior lateral stiffness. Recently, however, radial ply carcass structures are being used for their superior high speed running performance.

In such a radial tyre, the tread portion has been reinforced by a belt made of crossed plies of parallel cords (unwoven cord fabric). As a result, the rigidity of the tread shoulder portions is excessive and it is difficult to increase the camber thrust.

Further, as the tread of a motorcycle tyre is greatly curved in comparison with a four-wheeled vehicle tyre, a large difference in belt diameter exists between the tread edges and the tread centre. Therefore, in the belt edge regions, the belt cord arrangement is liable to be displaced, and further the hoop force is relatively decreased.

Therefore, cornering stability is affected, and belt edge separation and standing wave phenomena are liable to occur during high speed running.

To solve such problems in high speed running, a spirally wound belt has been proposed. However, in radial ply tyres for large-size heavy motorcycles, straight running stability especially in high speed running then is lost since a spiral belt has a small rigidity due to the very small cord angle.

It is therefore, an object of the present invention to provide a motorcycle radial tyre, in which both the straight running stability and cornering stability are improved.

According to one aspect of the present invention, a motorcycle radial tyre comprises a tread portion, a pair of axially spaced bead regions, a pair of sidewalls extending between tread edges and the bead regions, a bead core disposed in each bead region, a radial carcass comprising a ply of cords extending between the bead regions and turned up around the bead cores from the axially inside to the outside thereof to form two carcass ply turned up portions and a carcass ply main portion therebetween, and a belt disposed radially outside the carcass in the tread portion, characterised in that each of the two carcass ply turned up portions extend from each bead region into the tread portion to lie beyond the tyre equator so that the edges thereof overlap each other to form an overlapped portion in the tread centre portion, the axial width of the overlapped portion being in the range of 0.2 to 0.6 times the tread width between the tread edges, the belt having a ply of at least one cord wound spirally at an angle of not more than 5 degrees with respect to the tyre equator, and the axial width of the belt ply being in the range of 0.85 to 0.95 times the tread width.

Therefore, as the carcass ply edges are terminated radially inside the belt in the tread portion rather than in the sidewalls where the bending deformation is large, carcass ply separation which usually starts at the ply edges is effectively prevented, and the durability of the tyre is improved.

Further, as the carcass ply edges are secured or locked in the tread portion, resistance to high speed tyre rotation and resistance to high inner pressure are improved. Further, as the tension of the carcass ply is balanced axially inside and outside of the bead core, no moment acts on the bead core, and as a result abrasion of the carcass by the bead core is reduced, which also improves durability.

In the tread crown region which contacts the ground during straight running, a three-layered reinforcing structure is formed by the two overlapped turned up portions and the main carcass.

On the other hand, in the tread shoulders which contact the ground during cornering, a two-layered reinforcing structure is formed by one turned up portion and the main carcass.

Therefore, the tread crown region is reinforced more than the shoulder regions, and the straight running stability is improved.

Further, due to the smaller reinforcement and the spiral belt structure having a smaller bending rigidity than a cross ply belt structure, the tread shoulder regions can produce a high camber thrust to give good cornering stability.

Embodiments of the present invention will now be described in detail in conjunction with the accompanying drawings, in which:

Fig.1 is a cross sectional view of a tyre according to the present invention;
Fig.2 is a perspective view of a ribbon used to form the belt;
Fig.3 is a cross sectional view explaining a method of forming the belt; and
Fig.4 is a cross sectional view explaining another method of forming the belt.

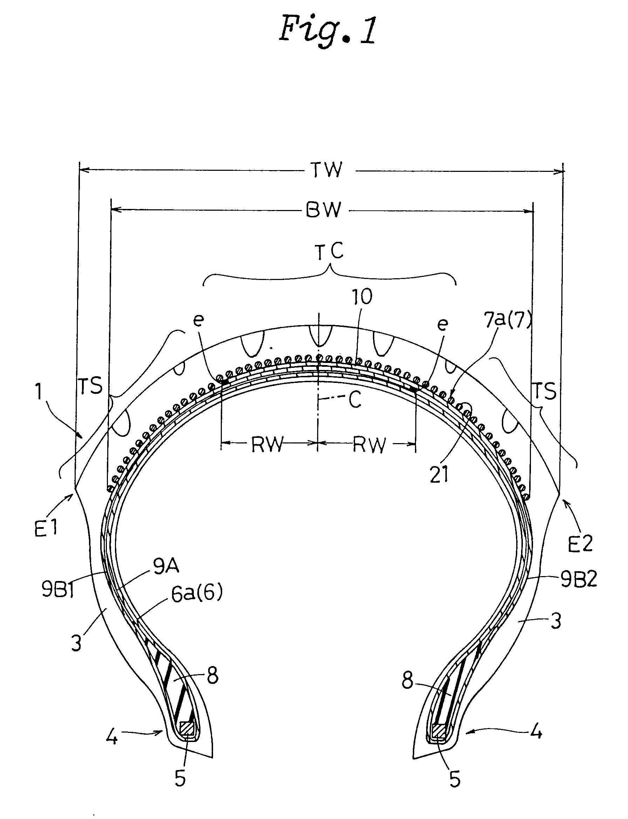

In Fig.1, a motorcycle radial tyre 1 of the invention has a tread portion 2, a pair of axially spaced bead regions 4, and a pair of sidewalls 3 extending between the tread edges (E1, E2) and the bead regions 4. A pair of bead cores 5 is disposed one in each of the bead regions 4, a carcass 6 extends between the bead regions and a belt 7 is disposed radially outside the carcass 6 and inside a rubber tread.

The tread portion 2 is curved so that the tread profile from one tread edge E1 to the other tread edge E2 has a substantially single radius of curvature and the maximum cross sectional width TW of the tyre lies between the tread edges E1 and E2.

The carcass 6 comprises at least one ply 6a, in this embodiment only one ply, of cords arranged radially at an angle of 70 to 90 degrees with respect to the tyre equator C.

For the carcass cords, organic fibre cords, for example nylon, rayon, polyester, aromatic polyamide or the like may be used.

The carcass ply 6a is turned up at each side around each of the bead cores 5 from the axially inside to the outside of the tyre so as to form a main carcass portion 9A extending from one bead core 5 to the other bead core 5 and two turned up portions 9B1 and 9B2.

Each of the turned up portions 9B1 and 9B2 is extended from its bead region 4 into the tread portion 2 part of the tyre equator C along the outer surface of the main portion 9A, and the edge (e) thereof is terminated within the tread portion 2, that is, between the further or opposite tread edge and the tyre equator C.

Accordingly, the edge regions of the two turned up portions 9B1 and 9B2 overlap each other in the tread centre or tread crown portion TC so as to form an overlapped portion 10.

In the tyre axial direction, the overlapped portion 10 is centred on the tyre equator C, and the axial distance RW from the tyre equator C to each edge (e) is 0.1 to 0.3 times the tread width TW measured axially between the tread edges E1 and E2. (Thus the overlapping width 2RW is 0.2TW to 0.6TW)

Accordingly, the carcass ply 6a provides a three-layered reinforcing structure in the tread crown portion TC and a two-layered reinforcing structure in the tread shoulder portions TS, so that the tread crown portion TC is reinforced more than the tread shoulder regions TS.

If the distance RW is less than 0.1 times the tread width TW, the width of the overlapped portion becomes smaller than the ground contacting width, and straight running performance is not improved.

If the distance RW is more than 0.3 times TW, camber trust becomes insufficient, and cornering performance is deteriorated.

No carcass ply cut edge exists in the bead regions or sidewalls where deformation during running is large. Therefore, ply edge separation is prevented.

Each bead portion 4 is provided between the carcass ply main portion 9A and its turned up portion 9B1 or 9B2 with a tapered rubber bead apex 8 extending radially outwardly from the bead core 5.

For the bead apex 8, a hard rubber compound having a JIS A hardness of 60 to 80 is usually used, but a relatively soft rubber compound having a hardness such as carcass cord topping rubber can be used. Further, the bead apex (i.e. the rubber between the main portion and turned up portion) may be eliminated.

The belt 7 comprises one ply 7a of a spiral winding of at least one cord.

The axial width BW of the belt 7 is 0.85 to 0.95 times the tread width TW.

The angle of the belt cord is not more than 5 degrees with respect to the tyre equator C.

If the width BW is less than 0.85 TW, the belt effect is insufficient in the tread shoulder portion TS, and uneven wear is liable to occur.

If the width BW is more than 0.95 times TW, tread rubber separation is liable to occur.

The belt ply 7a is formed by spirally winding at least one ribbon 11 on the radial outside of the carcass 6.

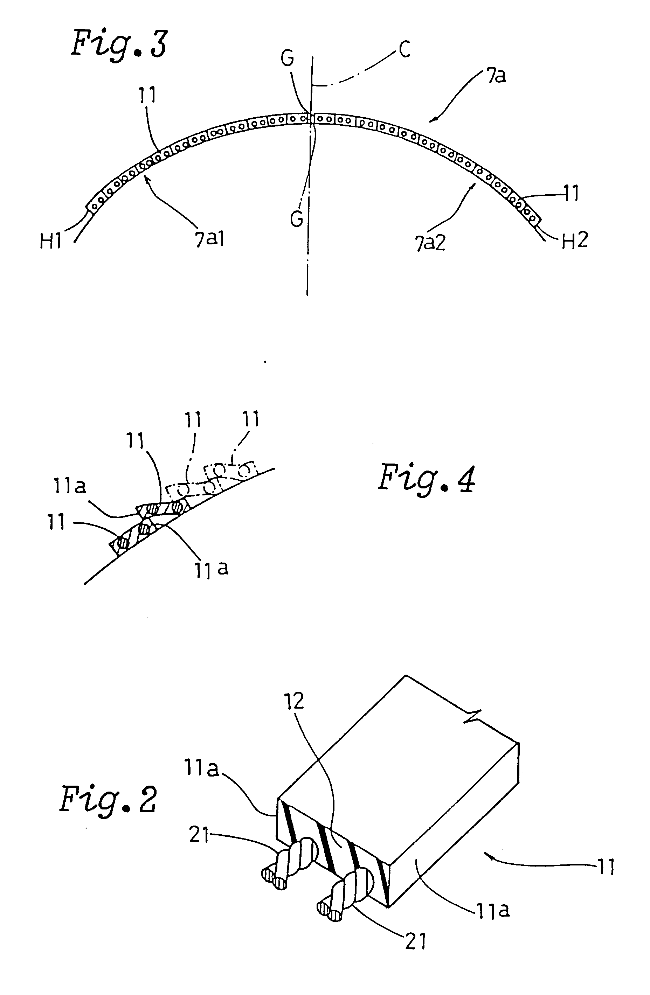

The ribbon 11 is, as shown in Fig. 2, a strip of rubber compound 12 in which one cord or a plurality of parallel cords 21 are embedded along the length thereof.

For the belt cords 21, organic fibre cords, e.g. nylon, aromatic polyamide or the like or steel cords can be used.

The belt ply 7a in this embodiment is formed by spirally winding two ribbons 11 having two parallel cords 21.

Fig. 3 shows a method of making such a belt ply, wherein two ribbons 11 are wound from starting points H1 and H2 near the tread edges E1 and E2, respectively, to ending points G on or near the tyre equator C.

To meet the above-mentioned angle limitation for the belt cord, the angle of the ribbons is not more than 5 degrees with respect to the tyre equator C.

Accordingly, the belt ply 7a in this example consists of two right and left pieces 7a1 and 7a2.

In the example in Fig.3, the adjacent edges of the ribbon 11 are not overlapped. However, as shown in Fig.4, it is possible to overlap one edge 11a upon the adjacent edge 11a of the previous winding to prevent the starting end of the ribbon from being loosened.

Further, the belt ply 7a can be formed by spirally winding one ribbon 11 continuously from point H1 to point H2.

Furthermore, in order to further reinforce the carcass 6, it is possible to provide a further carcass ply having turned up portions the edges of which are terminated in the bead portions 4 or the sidewalls 3. In this case, the height of the turned up portion edges is preferably set in the range of 0.4 to 0.6 times the height of the tread edges E1 and E2, each from the bead base line.

Test tyres of size 190/50 R17 for a rear wheel having the tyre structure shown in Fig. 1 were prepared and tested. The specifications and test results are given in Table 1.

Using a 750cc motorcycle provided on the rear wheel with one test tyre and on the front wheel with a 120/70V17 cross ply tyre, the speed at which vibration was naturally generated when running on an expressway was measured, and the steering stability and ride comfort were evaluated during running on a test course.

The wear resistance was evaluated from the amount of tread wear caused by 2000 km running according to a high speed wear test.

The results of each test are indicated by an index based on that Reference tyre 2 is 100. The larger the index, the better the result.

Using a 60-inch drum, the camber thrust was measured. The results are indicated by an index based on that Reference tyre 2 is 100. The larger the index, the better the result.

Further, the speed at which a standing wave was generated was measured. (Tyre load : 200 kgf, Inner pressure : 2.25kgf/sq.cm).

TABLE 1

| Tyre | Ex.1 | Ex.2 | Ex.3 | Ref.1 | Ref.2 | Ref.3 | Ref.4 | Ref.5 | Ref.6 |
|---|---|---|---|---|---|---|---|---|---|
| **Carcass** | | | | | | | | | |
| Structure | radial | radial | radial | cross | radial | radial | radial | radial | radial |
| Cord material | nylon | nylon | nylon | nylon | nylon | nylon | nylon | nylon | nylon |
| Cord structure | 1500d/2 | 1500d/2 | 1500d/2 | 1500d/2 | 1500d/2 | 1500d/2 | 1500d/2 | 1500d/2 | 1500d/2 |
| Cord angle (deg) | 90 | 70 | 88 | 30 | 90 | 90 | 90 | 90 | 90 |
| No of ply | 1 | 1 | 1 | 2 | 1 | 1 | 1 | 1 | 1 |
| RW/TW | 0.1 | 0.3 | 0.2 | 0.3 | 0.75 | 0.35 | 0.2 | 0.2 | 0.2 |
| **Belt** | | | | | | | | | |
| Structure | spiral | spiral | spiral | -- | spiral | spiral | spiral | spiral | spiral |
| Cord material | aramid | aramid | aramid | -- | aramid | aramid | aramid | aramid | aramid |
| Cord structure | 1500d/3 | 1500d/3 | 1500d/3 | -- | 1500d/3 | 1500d/3 | 1500d/3 | 1500d/3 | 1500d/3 |
| Cord angle (deg) | 0 | 5 | 0 | -- | 0 | 5 | 0 | 0 | 0 |
| No of ply | 1 | 1 | 1 | -- | 1 | 1 | 1 | 1 | 1 |
| BW/TW | 0.85 | 0.95 | 0.92 | -- | 0.85 | 0.85 | 0.85 | 0.80 | 0.97 |
| **Test Result** | | | | | | | | | |
| Steering stability (index) | 105 | 105 | 105 | 100 | 100 | 95 | 90 | 95 | 100 |
| Ride comfort (index) | 105 | 105 | 105 | 100 | 100 | 90 | 90 | 100 | 100 |
| Wear resistance (index) | 110 | 110 | 110 | 100 | 100 | 105 | 100 | 95 | 95 |
| Vibration generating speed (km/hr) | over 260 | over 260 | over 260 | 170 | 220 | 220 | 200 | 220 | 220 |
| Standing wave generating speed (km/hr) | 290 | 290 | 290 | 160 | 250 | 250 | 230 | 210 | 210 |
| Camber thrust (index) | 105 | 105 | 105 | 98 | 100 | 100 | 100 | 100 | 100 |

EP 0 549 311 A1

**Claims**

1. A motorcycle radial tyre comprising a tread portion (2), a pair of axially spaced bead regions (4), a pair of sidewalls (3) extending between tread edges (E1 and E2) and the bead regions (4), a bead core (5) disposed in each bead regions (4), a radial carcass (6) comprising a ply (6a) of cords extending between the bead regions (4) and turned up around the bead cores (5) from the axially inside to the outside thereof to form two carcass ply turned up portions (9B1 and 9B2) and a carcass ply main portion (9A) therebetween, and a belt (7) disposed radially outside the carcass in the tread portion, characterised in that each of the two carcass ply turned up portions (9B1 and 9B2) extend from each bead region (4) into the tread portion (2) to lie beyond the tyre equator (C) so that the edges (e) thereof overlap each other to form an overlapped portion (10) in the tread centre portion (TC), the axial width (2RW) of the overlapped portion (10) being in the range of 0.2 to 0.6 times the tread width (TW) between the tread edges, the belt (7) having a ply (7a) of at least one cord (21) wound spirally at an angle of not more than 5 degrees with respect to the tyre equator (C), and the axial width (BW) of the belt ply (7a) being in the range of 0.85 to 0.95 times the tread width (TW).

2. A motorcycle radial tyre according to claim 1, characterised in that the carcass (6) comprises only one ply (6a) of organic fibre cords.

3. A motorcycle radial tyre according to claim 1 or 2, characterised in that the belt (7) comprises only a single ply (7a) of spirally wound cords (21).

4. A motorcycle radial tyre according to claim 1 or 2, characterised in that the belt (7) comprises a ply (7a) formed by spirally winding a ribbon (11) of a rubber compound in which parallel cords (21) are embedded along the length thereof.

# Fig.1

*Fig.3*

*Fig.4*

*Fig.2*

**European Patent Office**

# EUROPEAN SEARCH REPORT

Application Number

EP 92 31 1662
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | DATABASE WPIL Week 9250, Derwent Publications Ltd., London, GB; AN 92-412368 & JP-A-4 310 405 (BRIDGESTONE CORP.) 2 November 1992 * abstract * | 1 | B60C15/00 B60C9/22 |
| Y | EP-A-0 453 294 (SUMITOMO RUBBER INDUSTRIES LTD.) * column 4, line 17 - line 26; claims; figures * | 1-4 | |
| Y | PATENT ABSTRACTS OF JAPAN vol. 10, no. 159 (M-486)(2215) 7 June 1986 & JP-A-61 012 405 ( YOKOHAMA GOMU K.K. ) 20 January 1986 * abstract * | 1-4 | |
| P,A | EP-A-0 467 585 (SUMITOMO RUBBER INDUSTRIES LTD.) * page 2, line 43 - line 47; claims; figures * | 1 | |
| A | EP-A-0 113 578 (SUMITOMO RUBBER INDUSTRIES LTD.) * page 2, line 12 - page 3, line 5; claims; figures; table 1 * | 1 | TECHNICAL FIELDS SEARCHED (Int. Cl.5) B60C |
| A | PATENT ABSTRACTS OF JAPAN vol. 15, no. 310 (M-1144)8 August 1991 & JP-A-31 14 903 ( BRIDGESTONE CORP. ) 16 May 1991 * abstract * | 1 | |

-/--

The present search report has been drawn up for all claims

| Place of search | Date of completion of the search | Examiner |
|---|---|---|
| THE HAGUE | 23 MARCH 1993 | BARADAT J.L. |

## EUROPEAN SEARCH REPORT

Application Number

EP 92 31 1662
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN<br>vol. 16, no. 026 (M-1202)22 January 1992<br>& JP-A-32 39 602 ( BRIDGESTONE CORP. ) 25 October 1991<br>* abstract * | 1,2 | |
| | ----- | | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 23 MARCH 1993 | BARADAT J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)